# EUROPÄISCHE PATENTANMELDUNG

(11) **EP 4 755 823 A1**
(43) Veröffentlichungstag der Anmeldung: **10.06.2026**
(21) Anmeldenummer: 25217782.9
(22) Anmeldetag: 21.11.2025
(51) Int. Cl.: B65G 1/04, B66F 9/06

(54) **REGALROBOTER UND STEUERUNG EINES SOLCHEN REGALROBOTERS**

(30) Priorität: 06.12.2024 DE 102024136434
(71) Anmelder: Volkswagen Aktiengesellschaft, 38440 Wolfsburg (DE)
(72) Erfinder: Ebert, Falk Dr., 38440 Wolfsburg (DE); Borowski, Jan, 38440 Wolfsburg (DE)

(57) **Zusammenfassung**

Die vorliegende Erfindung betrifft einen Regelroboter (1), insbesondere einen Regalroboter (1) für ein Kleinlager. Die Erfindung betrifft zudem ein Verfahren, ein Computerprogramm mit Instruktionen und ein Steuergerät zum Steuern eines solchen Regalroboters (1). Der Regalroboter (1) weist eine Basisbaugruppe (10) mit einer Antriebseinheit, eine Lagerbaugruppe (20) mit zumindest einer Lagereinheit (21) zum Lagern eines Transportgutes (TG) und eine Manipulatorbaugruppe (30) zum Manipulieren eines Transportgutes (TG) auf. Die Manipulatorbaugruppe (30) ist ausgestaltet, das Transportgut (TG) entlang einer ersten horizontalen Linearachse (Aₓ) von einem Regallagerplatz in einen Vertikaltransportbereich (40) zu bewegen und entlang einer zweiten horizontalen Linearachse (A_{y}), die senkrecht zur ersten horizontalen Linearachse (Aₓ) ist, vom Vertikaltransportbereich (40) zu einer Lagereinheit (21) der Lagerbaugruppe (20) zu bewegen.

## Beschreibung

Die vorliegende Erfindung betrifft einen Regelroboter, insbesondere einen Regalroboter für ein Kleinlager. Die Erfindung betrifft zudem ein Verfahren, ein Computerprogramm mit Instruktionen und ein Steuergerät zum Steuern eines solchen Regalroboters.

Im Bereich der Logistik werden zunehmend Roboter für den Transport und die Handhabung von Kisten oder Kartons eingesetzt, beispielsweise um diese in Regalen einzulagern oder aus den Regalen zu entnehmen. Dabei liegt ein Schwerpunkt der Entwicklung auf Robotern für große Warenlager.

Ein automatisierter Transport von Transportgütern wäre auch für Kleinlager wünschenswert, wie sie beispielsweise in Werkstätten oder Handwerksbetrieben zu finden sind. Allerdings haben Kleinlager in Werkstätten in der Regel schmale Regalgänge, meist mit einer Breite zwischen 0,9 m und 1,0 m und einer Höhe von ca. 2,1 m. Die marktgängigen Lösungen sind zu groß, um solche Regalgänge befahren und in der Zuwegung wenden zu können. Ebenso passen sie nicht durch die üblicherweise vorhandenen Türen mit einer Höhe von ca. 2,0 m. Sie sind für große Warenlager vorgesehen.

Vor diesem Hintergrund beschreibt DE 20 2018 006 834 U1 einen Roboter mit einer Laufvorrichtung, einem über der Laufvorrichtung angeordneten Körper, einer über dem Körper angeordneten Aufnahmevorrichtung und einer Gegenstandgreifvorrichtung. Die Aufnahmevorrichtung umfasst einen Aufnahmeplatz mit mehreren übereinander angeordneten Fächern.

DE 20 2019 005 946 U1 beschreibt einen Handhabungsroboter mit einem Bewegungsfahrwerk, einem auf dem Bewegungsfahrwerk angeordneten Zwischenlagerregal, einer auf dem Bewegungsfahrwerk angeordneten Zwischenlagerregal Hebeverstellanordnung, einer Kistenentnahmeanordnung, die horizontal in Bezug auf das Bewegungsfahrwerk ausfahrbar ist, und eine Teleskopverstellanordnung, die an der Hebeverstellanordnung angeordnet und mit der Kistenentnahmeanordnung verbunden ist.

EP 3 372 541 B1 beschreibt einen Roboter zum Greifen und Transportieren von Gegenständen. Der Roboter umfasst einen Rahmen und eine Greifeinheit. Die Greifeinheit ist dazu konfiguriert, in einer Einsatzkonfiguration verschiedene vertikale Positionen in Bezug auf den Rahmen anzunehmen.

Es ist eine Aufgabe der Erfindung, einen verbesserten Regalroboter für ein Kleinlager sowie Lösungen zum Steuern eines solchen Regalroboters bereitzustellen.

Diese Aufgabe wird durch einen Regalroboter mit den Merkmalen des Anspruchs 1, durch ein Verfahren gemäß Anspruch 13, durch ein Computerprogramm mit Instruktionen gemäß Anspruch 14 und durch ein Steuergerät gemäß Anspruch 15 gelöst. Bevorzugte Ausgestaltungen der Erfindung sind Gegenstand der abhängigen Ansprüche.

Gemäß einem ersten Aspekt der Erfindung weist ein Regalroboter für ein Kleinlager auf:
- eine Basisbaugruppe mit einer Antriebseinheit;
- eine Lagerbaugruppe mit zumindest einer Lagereinheit zum Lagern eines Transportgutes; und
- eine Manipulatorbaugruppe zum Manipulieren eines Transportgutes, wobei die Manipulatorbaugruppe ausgestaltet ist, das Transportgut entlang einer ersten horizontalen Linearachse von einem Regallagerplatz in einen Vertikaltransportbereich zu bewegen und entlang einer zweiten horizontalen Linearachse, die senkrecht zur ersten horizontalen Linearachse ist, vom Vertikaltransportbereich zu einer Lagereinheit der Lagerbaugruppe zu bewegen.

Gemäß einem weiteren Aspekt der Erfindung hat ein Verfahren zum Steuern eines erfindungsgemäßen Regalroboters die Schritte:
- Bewegen eines Transportgutes entlang einer ersten horizontalen Linearachse von einem Regallagerplatz in einen Vertikaltransportbereich des Regalroboters;
- sofern erforderlich, Bewegen des Transportgutes innerhalb des Vertikaltransportbereichs entlang einer vertikalen Linearachse; und
- Bewegen des Transportgutes entlang einer zweiten horizontalen Linearachse, die senkrecht zur ersten horizontalen Linearachse ist, vom Vertikaltransportbereich zu einer Lagereinheit einer Lagerbaugruppe des Regalroboters.

Gemäß einem weiteren Aspekt der Erfindung enthält ein Computerprogramm Instruktionen, die bei Ausführung durch einen Computer den Computer zur Ausführung der folgenden Schritte zum Steuern eines erfindungsgemäßen Regalroboters veranlassen:
- Bewegen eines Transportgutes entlang einer ersten horizontalen Linearachse von einem Regallagerplatz in einen Vertikaltransportbereich des Regalroboters;
- sofern erforderlich, Bewegen des Transportgutes innerhalb des Vertikaltransportbereichs entlang einer vertikalen Linearachse; und
- Bewegen des Transportgutes entlang einer zweiten horizontalen Linearachse, die senkrecht zur ersten horizontalen Linearachse ist, vom Vertikaltransportbereich zu einer Lagereinheit einer Lagerbaugruppe des Regalroboters.

Der Begriff Computer ist dabei breit zu verstehen. Insbesondere umfasst er auch Steuergeräte, eingebettete Systeme und andere prozessorbasierte Datenverarbeitungsvorrichtungen. Zudem werden die einzelnen Schritte nicht notwendigerweise unmittelbar vom Computer ausgeführt. Es ist ebenso möglich, dass der Computer zur Durchführung einzelner Schritte externe Komponenten ansteuert bzw. auf diese zurückgreift.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist ein Steuergerät für einen erfindungsgemäßen Regalroboter einen Speicher mit darin abgelegten Instruktionen und einen Prozessor auf, wobei der Prozessor eingerichtet ist, bei Ausführung der Instruktionen die folgenden Schritte zum Steuern eines erfindungsgemäßen Regalroboters auszuführen:
- Bewegen eines Transportgutes entlang einer ersten horizontalen Linearachse von einem Regallagerplatz in einen Vertikaltransportbereich des Regalroboters;
- sofern erforderlich, Bewegen des Transportgutes innerhalb des Vertikaltransportbereichs entlang einer vertikalen Linearachse; und
- Bewegen des Transportgutes entlang einer zweiten horizontalen Linearachse, die senkrecht zur ersten horizontalen Linearachse ist, vom Vertikaltransportbereich zu einer Lagereinheit einer Lagerbaugruppe des Regalroboters.

Bei der erfindungsgemäßen Lösung weist der Regalroboter eine Lagerbaugruppe mit zumindest einer Lagereinheit auf. Um ein Transportgut zu dieser Lagereinheit zu verbringen, wird das Transportgut entlang einer horizontalen Linearachse bewegt, die senkrecht zu einer weiteren horizontalen Linearachse angeordnet ist, entlang derer das Transportgut aus dem Regal entnommen wird bzw. in das Regal verbracht wird. Durch diese Anordnung der Linearachsen wird eine sehr kompakte Bauweise erzielt. Dennoch können mindestens zwei Transportgüter zugleich transportiert werden, eines in der Lagereinheit, ein weiteres im Vertikaltransportbereich. Bei der Verwendung von gängigen Kleinladungsträgern mit den horizontalen Abmessungen von 0,4 m × 0,6 m hat der Regalroboter einen Fußabdruck von ca. 0,8 m Breite und 1 m Länge.

Gemäß einem Aspekt der Erfindung ist die Manipulatorbaugruppe ausgestaltet, das Transportgut innerhalb des Vertikaltransportbereichs entlang einer vertikalen Linearachse zu bewegen. Durch die Bewegung des Transportgutes entlang einer vertikalen Linearachse ist der Lagerroboter in der Lage, Transportgüter aus unterschiedlichen Regalbodenhöhen zu entnehmen und zur Lagereinheit zu verbringen. Zudem kann mehr als ein Transportgut aus einer Regalbodenhöhe entnommen werden. Darüber hinaus kann trotz der Fähigkeit, Transportgüter aus höheren Regalböden zu entnehmen, eine kleine Bauhöhe von ca. 1,7 m erzielt werden. Somit sind Durchfahrten durch gängige Türen möglich.

Gemäß einem Aspekt der Erfindung liegt der Vertikaltransportbereich innerhalb einer Grundfläche der Basisbaugruppe. Auf diese Weise kann der Lagerroboter überaus kompakt ausgeführt werden. Zugleich ist er sehr kippsicher und einfach zu manövrieren, da bei der Bewegung des Lagerroboters keine überstehenden Komponenten berücksichtigt werden müssen.

Gemäß einem Aspekt der Erfindung ist die erste horizontale Linearachse senkrecht zu einer Hauptbewegungsrichtung des Regalroboters. Durch dieses seitliche Beladen und Entladen muss der Regalroboter nicht aufwendig exakt vor dem Regalfach innerhalb eines Regalgangs platziert werden. Ein Ausgleich von Ungenauigkeiten der Position ist ohne Weiteres durch eine entsprechende Bewegung der Manipulatorbaugruppe entlang der zweiten horizontalen Linearachse möglich.

Gemäß einem Aspekt der Erfindung weist die Lagerbaugruppe zwei oder mehr Lagereinheiten auf. Die zwei oder mehr Lagereinheiten sind dabei übereinander angeordnet, d.h. sie bilden eine Art Regal. Auf diese Weise wird der gleichzeitige Transport von mehr als zwei Transportgütern ermöglicht. Zudem können die Transportgüter auf dem Regalroboter sortiert werden.

Gemäß einem Aspekt der Erfindung ist zumindest eine der zwei oder mehr Lagereinheiten manuell oder motorisch in der Höhe verstellbar. Dies ist vorteilhaft, falls Transportgüter mit unterschiedlichen Höhen transportiert werden sollen. Dies kann beispielsweise der Fall sein, wenn Kisten mit verschiedenen Abmessungen verwendet werden oder wenn der Inhalt einer Kiste über den oberen Rand der Kiste hinaus reicht.

Gemäß einem Aspekt der Erfindung weist die Manipulatorbaugruppe einen Teleskopgreifer zum Greifen eines Transportgutes auf. Zum Greifen des Transportgutes kann die Teleskopmechanik beispielsweise ausfahren und am Transportgut vorbeifahren. Im ausgefahrenen Zustand können dann zwei Verriegelungen umgelegt werden. Sobald die Teleskopmechanik eingezogen wird, wird das Transportgut mitgezogen.

Gemäß einem Aspekt der Erfindung weist der Teleskopgreifer Greifelemente auf, deren Abstand manuell oder motorisch einstellbar ist. Auf diese Weise ist der Regalroboter in der Lage, Transportgüter mit unterschiedlicher Breite zu greifen.

Gemäß einem Aspekt der Erfindung weist die Manipulatorbaugruppe eine Ablage für ein Transportgut auf. Für die Einlagerung und Auslagerung von Transportgütern wird vorzugsweise das mechanische Ziehen und Drücken des Transportgutes verwendet. Die Ablage trägt dabei das Gewicht des Transportgutes, so dass die Anforderungen an die mechanische Stabilität der zum Ziehen und Drücken des Transportgutes genutzte Mechanik reduziert sind.

Gemäß einem Aspekt der Erfindung weist der Regalroboter eine Gehäusebaugruppe zur Aufnahme der Lagerbaugruppe und der Manipulatorbaugruppe auf. Die Gehäusebaugruppe dient dabei insbesondere dem Schutz der Komponenten des Regalroboters und der Transportgüter während des Transports.

Gemäß einem Aspekt der Erfindung weist der Regalroboter eine Sensorik zum Erfassen einer Umgebung des Regalroboters auf. Insbesondere kann die Sensorik ausgestaltet sein, die Lage oder die Maße eines Transportgutes in einem Regal zu erfassen oder Hindernisse bei der Bewegung des Regalroboters zu ermitteln. Die Sensorik kann beispielsweise Kamerasysteme, Lidarsensoren, Ultraschallsensoren, Lichtschranken oder andere geeignete Sensoren nutzen.

Gemäß einem Aspekt der Erfindung ist der Regalroboter ausgestaltet, autonom zu agieren oder durch eine Zentraleinheit gesteuert zu werden. Welcher Ansatz bei der Steuerung verwendet wird, kann z.B. in Abhängigkeit von der Anwendungsumgebung oder vom verfügbaren Budget entschieden werden. Dabei sind auch Kombinationen der beiden Ansätze möglich, indem beispielsweise die Bewegung des Regalroboters innerhalb des Kleinlagers durch eine Zentraleinheit gesteuert wird, die Handhabung der Transportgüter beim Beladen oder Entladen hingegen autonom.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch einen Grundriss einer Werkstatt mit einem Kleinlager;
- Fig. 2: zeigt schematisch Regale eines Kleinlagers;
- Fig. 3: zeigt schematisch einen erfindungsgemäßen Regalroboter;
- Fig. 4: zeigt schematisch ein Verfahren zum Steuern eines erfindungsgemäßen Regalroboters;
- Fig. 5: zeigt schematisch ein Steuergerät für einen erfindungsgemäßen Regalroboter;
- Fig. 6: zeigt eine erste Ansicht einer Ausführungsform eines erfindungsgemäßen Regalroboters; und
- Fig. 7: zeigt eine zweite Ansicht des Regalroboters aus Fig. 6

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

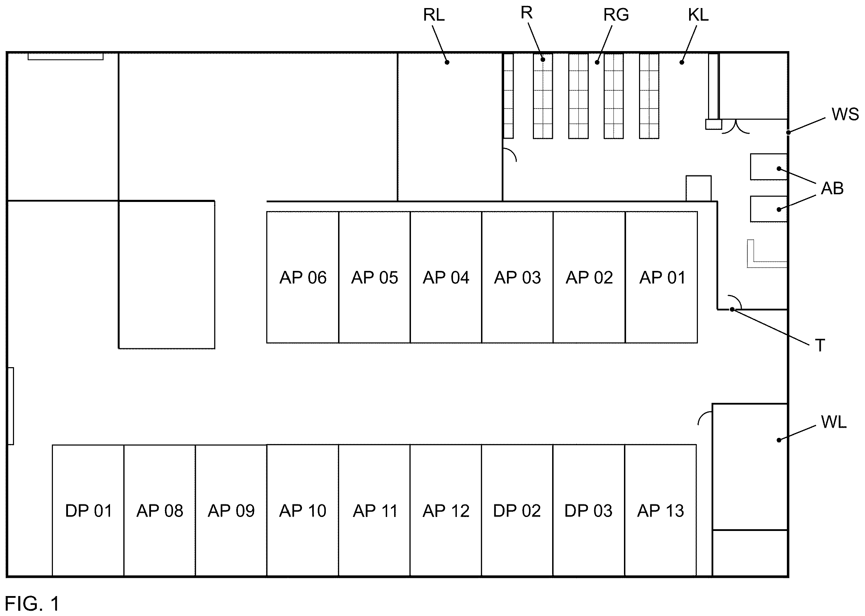

Fig. 1 zeigt schematisch einen Grundriss einer Werkstatt WS mit einem Kleinlager KL. Die Werkstatt WS, in diesem Beispiel eine Werkstatt für Kraftfahrzeuge, weist eine Anzahl vor Arbeitsplätzen AP und Diagnoseplätzen DP auf. Ebenfalls dargestellt sind ein Reifenlager RL, Räume WL für die Werkstattleitung sowie einige Arbeitsbereiche AB für die Mitarbeiter. Das Kleinlager KL weist eine Anzahl von Regalen R mit entsprechenden Regallagerplätzen LP auf. Aus dem Kleinlager KL müssen Transportgüter, insbesondere Kleinladungsträger bzw. Kisten mit Ersatzteilen, zu den Arbeitsplätzen AP transportiert werden. Gut zu sehen ist, dass die Regalgänge RG des Kleinlagers KL recht schmal sind. Ihre Breite liegt meist zwischen 0,9 m und 1,0 m. Zudem muss auf dem Weg zu den Arbeitsplätzen AP eine Tür T passiert werden. Üblicherweise hat eine solche Tür T eine Höhe von ca. 2,0 m. Marktgängige Regalroboter sind zu groß, um solche Regalgänge RG befahren und in der Zuwegung wenden zu können. Ebenso passen sie nicht durch die Tür T.

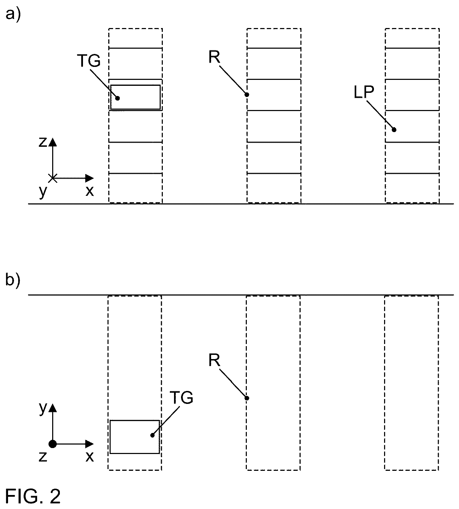

Fig. 2 zeigt schematisch einige Regale R eines Kleinlagers. Dabei zeigt Fig. 2a) eine Ansicht von der Seite bzw. der Regalkopfseite, Fig. 2b) eine Ansicht von oben. Bei den Regalen R handelt es sich um Standardregale mit ebenen Blechfächern, in denen Transportgüter TG liegen, z.B. Kisten, die jeweils einen fertig kommissionierten Auftrag beinhalten. Jedes Transportgut TG befindet sich an einem zugeordneten Regallagerplatz LP, der durch eine Regalnummer, eine Regalebene und seine Lage innerhalb der Regalebene eindeutig identifiziert werden kann.

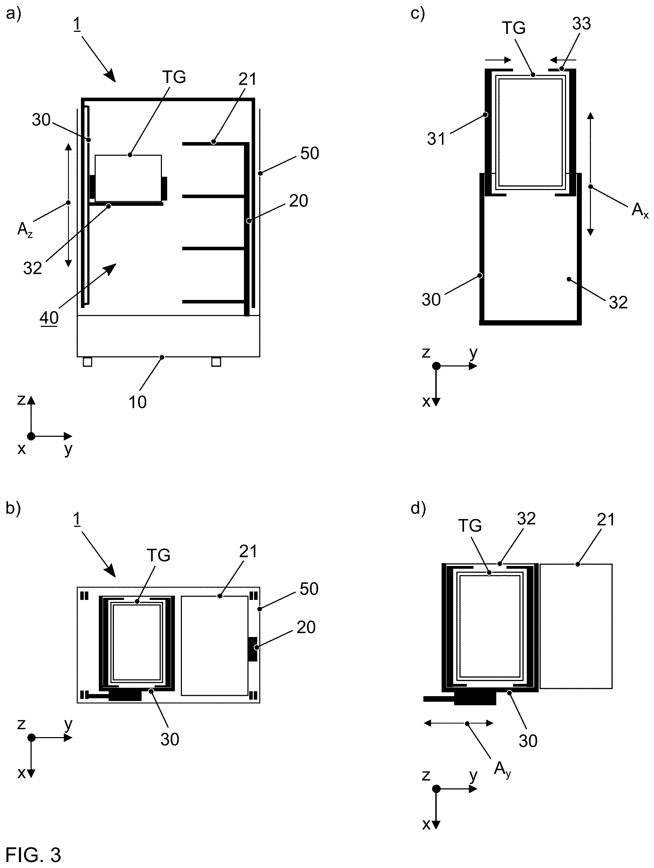

Fig. 3 zeigt schematisch eine Ausführungsform eines erfindungsgemäßen Regalroboters 1 für ein Kleinlager. Dabei zeigt Fig. 3a) eine Ansicht von der Seite, Fig. 3b) eine Ansicht von oben. Der Regalroboter 1 weist eine Basisbaugruppe 10 auf, in der eine hier nicht dargestellte Antriebseinheit angeordnet ist. Die Antriebseinheit kann insbesondere Räder, einen Motor zum Antrieb der Räder und einen Energiespeicher aufweisen. Auf der Basisbaugruppe 10 ist eine Lagerbaugruppe 20 angeordnet. Die Lagerbaugruppe 20 weist zumindest eine Lagereinheit 21 zum Lagern eines Transportgutes TG auf. In Fig. 3 weist die Lagerbaugruppe 20 beispielhaft vier Lagereinheiten 21 in Form von Lagerfächern auf. Auf der Basisbaugruppe 10 ist angrenzend an die Lagerbaugruppe 20 zudem eine Manipulatorbaugruppe 30 angeordnet. Die Manipulatorbaugruppe 30 dient zum Manipulieren eines Transportgutes TG. Die Manipulatorbaugruppe 30 ist dabei ausgestaltet, das Transportgut TG entlang einer ersten horizontalen Linearachse Aₓ von einem Regallagerplatz in einen Vertikaltransportbereich 40 zu bewegen. Die Manipulatorbaugruppe 30 ist zudem ausgestaltet, das Transportgut TG entlang einer zweiten horizontalen Linearachse A_{y}, die senkrecht zur ersten horizontalen Linearachse Aₓ ist, vom Vertikaltransportbereich 40 zu einer Lagereinheit 21 der Lagerbaugruppe 20 zu bewegen. Dies ist in Fig. 3c) und Fig. 3d) schematisch dargestellt. Innerhalb des Vertikaltransportbereiches 40 kann die Manipulatorbaugruppe 30 das Transportgut TG entlang einer vertikalen Linearachse A_{z} bewegen, um es auf die Höhe der gewünschten Lagereinheit 21 zu bringen. Durch die drei kartesisch angeordneten Linearachsen Aₓ, A_{y}, A_{z} wird eine sehr kompakte Bauweise erreicht. Eine hier lediglich angedeutete Gehäusebaugruppe 50 dient zur Aufnahme der Lagerbaugruppe 20 und der Manipulatorbaugruppe 30. Die Gehäusebaugruppe 50 dient dabei insbesondere dem Schutz der Komponenten des Regalroboters 1 und der Transportgüter TG während des Transports.

Beim erfindungsgemäßen Regalroboter 1 wird für die Ein- und Auslagerung das mechanische Ziehen und Drücken des Transportgutes TG, d.h. der Kiste, verwendet. Dabei fährt ein Teleskopgreifer 31 aus und an der Kiste vorbei, wo im ausgefahrenen Zustand zwei Verriegelungen 33 umgelegt werden können. Sobald der Teleskopgreifer 31 eingezogen wird, wird die Kiste auf eine Ablage 32 mitgezogen. Beim wieder Auslagern kann die Kiste über eine feste Mechanik vom Regalroboter 1 gedrückt werden. Auf dem Regalroboter 1 wird die Kiste durch eine Seitwärtsbewegung des Teleskopgreifers 31 bewegt. Auf der Lagerposition wird der Teleskopgreifer 31 vertikal verfahren, bis er oberhalb der abgelegten Kiste ist, und dort wieder eingefahren. Die Auslagerung erfolgt in umgekehrter Reihenfolge.

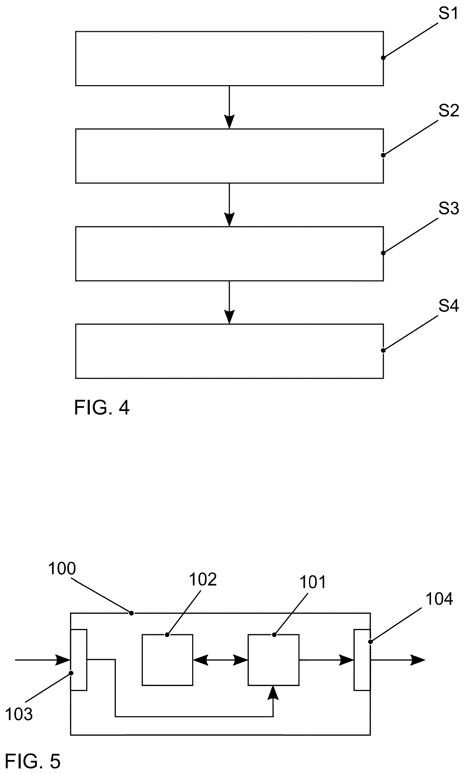

Fig. 4 zeigt schematisch ein Verfahren zum Steuern eines erfindungsgemäßen Regalroboters 1. In einem ersten Schritt wird ein Transportgut entlang einer ersten horizontalen Linearachse von einem Regallagerplatz in einen Vertikaltransportbereich des Regalroboters bewegt S1. Sofern erforderlich, wird das Transportgut dann innerhalb des Vertikaltransportbereichs entlang einer vertikalen Linearachse bewegt S2, um es auf eine gewünschte Höhe zu bringen. Schließlich wird das Transportgut entlang einer zweiten horizontalen Linearachse, die senkrecht zur ersten horizontalen Linearachse ist, vom Vertikaltransportbereich zu einer Lagereinheit einer Lagerbaugruppe des Regalroboters bewegt S4. Optional kann zuvor die Lagereinheit auf eine gewünschte Höhe verfahren werden S3.

Fig. 5 zeigt eine vereinfachte schematische Darstellung eines Steuergerätes 100 für einen erfindungsgemäßen Regalroboter, das für die Ausführung des Verfahrens aus Fig. 4 ausgestaltet ist. Das Steuergerät 100 weist einen Prozessor 101 und einen Speicher 102 auf. Im Speicher 102 sind Instruktionen abgelegt, die das Steuergerät 100 bei Ausführung durch den Prozessor 101 veranlassen, die Schritte gemäß dem beschriebenen Verfahren auszuführen. Die im Speicher 102 abgelegten Instruktionen verkörpern somit ein durch den Prozessor 101 ausführbares Programm, welches das erfindungsgemäße Verfahren realisiert. Das Steuergerät 100 hat einen Eingang 103 zum Empfangen von Daten. Vom Prozessor 101 generierte Daten werden über einen Ausgang 104 bereitgestellt. Darüber hinaus können Daten im Speicher 102 abgelegt werden. Der Eingang 103 und der Ausgang 104 können zu einer bidirektionalen Schnittstelle zusammengefasst sein.

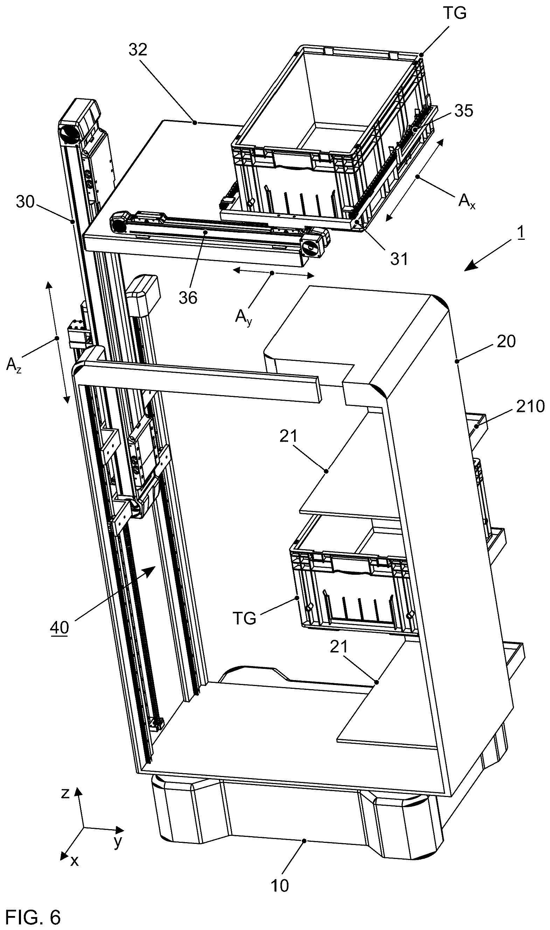

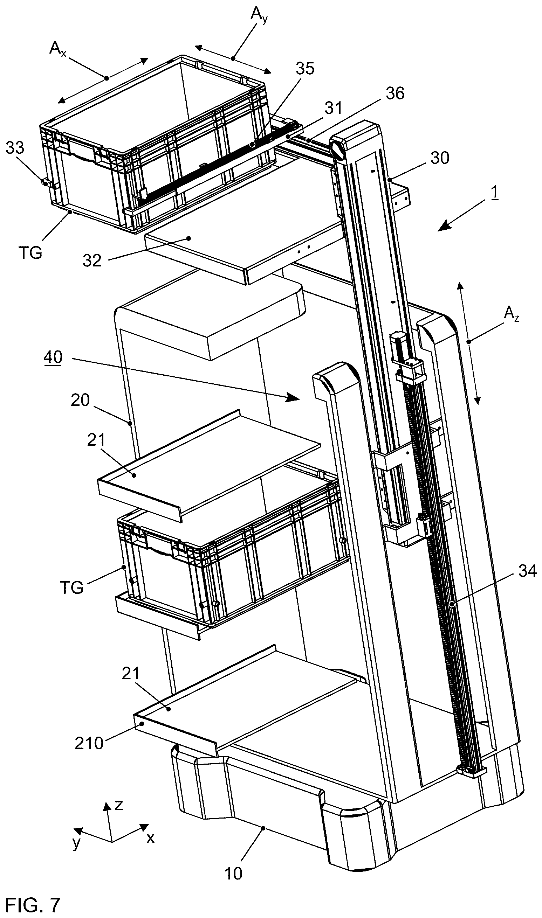

Nachfolgend soll eine bevorzugte Ausführungsform der Erfindung anhand von Fig. 6 und Fig. 7 erläutert werden.

Fig. 6 und Fig. 7 zeigen zwei Schrägansichten einer bevorzugten Ausführungsform eines erfindungsgemäßen Regalroboters 1. Der Regalroboter 1 weist eine Basisbaugruppe 10 auf. In dieser ist eine hier nicht sichtbare Antriebseinheit angeordnet. Die Antriebseinheit weist insbesondere Räder, von denen zumindest einzelne lenkbar sind, einen Motor zum Antrieb der Räder und einen Energiespeicher auf. Auf der Basisbaugruppe 10 ist eine Lagerbaugruppe 20 angeordnet. Die Lagerbaugruppe 20 weist drei Lagereinheiten 21 zum Lagern von kistenförmigen Transportgütern TG auf. Bei den Lagereinheiten 21 handelt es sich um Lagerfächer, die eine Teilumrandung 210 aufweisen. Die Teilumrandung 210 sichert die Transportgüter TG während des Transports. Auf der Basisbaugruppe 10 ist angrenzend an die Lagerbaugruppe 20 eine Manipulatorbaugruppe 30 angeordnet. Die Manipulatorbaugruppe 30 dient zum Manipulieren eines Transportgutes TG. Die Manipulatorbaugruppe 30 ist dabei ausgestaltet, das Transportgut TG entlang einer ersten horizontalen Linearachse Aₓ von einem Regallagerplatz in einen Vertikaltransportbereich 40 zu bewegen. Zu diesem Zweck dient eine Teleskopmechanik 36, die als Teleskopgreifer 31 ausgestaltet ist und das Transportgut TG auf eine Ablage 32 zieht.

Innerhalb des Vertikaltransportbereiches 40 kann die Manipulatorbaugruppe 30 das Transportgut TG mittels eines Spindelantriebs 34 entlang einer vertikalen Linearachse A_{z} bewegen, um es auf die Höhe der gewünschten Lagereinheit 21 zu bringen. Wenn sich das Transportgut TG auf der gewünschten Höhe befindet, kann es zusammen mit dem Teleskopgreifer 31 mittels eines Linearschlittens 35 entlang einer zweiten horizontalen Linearachse A_{y}, die senkrecht zur ersten horizontalen Linearachse Aₓ ist, vom Vertikaltransportbereich 40 auf die entsprechende Lagereinheit 21 geschoben werden. Für die Ein- und Auslagerung wird somit das mechanische Ziehen und Drücken des Transportgutes TG genutzt. Dabei fährt der Teleskopgreifer 31 aus und an der Kiste vorbei, wo im ausgefahrenen Zustand zwei hier Verriegelungen 33 umgelegt werden können. Diese sind in Fig. 7 lediglich angedeutet. Sobald der Teleskopgreifer 31 eingezogen wird, wird das Transportgut TG auf die Ablage 32 gezogen. Auf dem Regalroboter 1 wird die Kiste durch eine Seitwärtsbewegung des Teleskopgreifers 31 bewegt. Auf der Lagerposition wird der Teleskopgreifer 31 mittels des Spindelantriebs 34 vertikal verfahren, bis er oberhalb des abgelegten Transportgutes TG ist, und dort mittels des Linearschlittens 35 wieder eingefahren. Die Auslagerung erfolgt in umgekehrter Reihenfolge.

Vorzugsweise weist der Regalroboter 1 eine hier nicht dargestellte Sensorik zum Erfassen einer Umgebung auf. Insbesondere kann die Sensorik ausgestaltet sein, die Lage oder die Maße eines Transportgutes TG in einem Regal zu erfassen oder Hindernisse bei der Bewegung des Regalroboters 1 zu ermitteln. Die Sensorik kann beispielsweise Kamerasysteme, Lidarsensoren, Ultraschallsensoren, Lichtschranken oder andere geeignete Sensoren nutzen.

### Bezugszeichenliste

- 1: Regalroboter
- 10: Basisbaugruppe
- 20: Lagerbaugruppe
- 21: Lagereinheit
- 210: Teilumrandung
- 30: Manipulatorbaugruppe
- 31: Teleskopgreifer
- 310: Greifelement
- 32: Ablage
- 33: Verriegelung
- 34: Spindelantrieb
- 35: Linearschlitten
- 36: Teleskopmechanik
- 40: Vertikaltransportbereich
- 50: Gehäusebaugruppe
- 100: Steuergerät
- 101: Prozessor
- 102: Speicher
- 103: Eingang
- 104: Ausgang

- Aₓ: Erste horizontale Linearachse
- A_{y}: Zweite horizontale Linearachse
- A_{z}: Vertikale Linearachse
- AB: Arbeitsbereich
- AP: Arbeitsplatz
- DP: Diagnoseplatz
- KL: Kleinlager
- LP: Regallagerplatz
- R: Regal
- RG: Regalgang
- RL: Reifenlager
- T: Tür
- TG: Transportgut
- WL: Werkstattleitung
- WS: Werkstatt

- S1: Bewegen eines Transportgutes von einem Regallagerplatz in einen Vertikaltransportbereich
- S2: Bewegen des Transportgutes innerhalb des Vertikaltransportbereichs
- S3: Verstellen einer Lagereinheit in der Höhe
- S4: Bewegen des Transportgutes vom Vertikaltransportbereich zu einer Lagereinheit

## Patentansprüche

1. Regalroboter (1) für ein Kleinlager (KL), mit:
- einer Basisbaugruppe (10) mit einer Antriebseinheit;
- einer Lagerbaugruppe (20) mit zumindest einer Lagereinheit (21) zum Lagern eines Transportgutes (TG); und
- einer Manipulatorbaugruppe (30) zum Manipulieren eines Transportgutes (TG), wobei die Manipulatorbaugruppe (30) ausgestaltet ist, das Transportgut (TG) entlang einer ersten horizontalen Linearachse (Aₓ) von einem Regallagerplatz (LP) in einen Vertikaltransportbereich (40) zu bewegen (S1) und entlang einer zweiten horizontalen Linearachse (A_{y}), die senkrecht zur ersten horizontalen Linearachse (Aₓ) ist, vom Vertikaltransportbereich (40) zu einer Lagereinheit (21) der Lagerbaugruppe (20) zu bewegen (S4).

2. Regalroboter (1) gemäß Anspruch 1, wobei die Manipulatorbaugruppe (30) ausgestaltet ist, das Transportgut (TG) innerhalb des Vertikaltransportbereichs (40) entlang einer vertikalen Linearachse (A_{z}) zu bewegen (S2).

3. Regalroboter (1) gemäß Anspruch 1 oder 2, wobei der Vertikaltransportbereich (40) innerhalb einer Grundfläche der Basisbaugruppe (10) liegt.

4. Regalroboter (1) gemäß einer der vorherigen Ansprüche, wobei die erste horizontale Linearachse (Aₓ) senkrecht zu einer Hauptbewegungsrichtung des Regalroboters (1) ist.

5. Regalroboter (1) gemäß einer der vorherigen Ansprüche, wobei die Lagerbaugruppe (20) zwei oder mehr Lagereinheiten (21) aufweist.

6. Regalroboter (1) gemäß Anspruch 5, wobei zumindest eine der zwei oder mehr Lagereinheiten (21) manuell oder motorisch in der Höhe verstellbar (S3) ist.

7. Regalroboter (1) gemäß einer der vorherigen Ansprüche, wobei die Manipulatorbaugruppe (30) einen Teleskopgreifer (31) zum Greifen eines Transportgutes (TG) aufweist.

8. Regalroboter (1) gemäß Anspruch 7, wobei der Teleskopgreifer (31) Greifelemente (310) aufweist, deren Abstand manuell oder motorisch einstellbar ist.

9. Regalroboter (1) gemäß einer der vorherigen Ansprüche, wobei die Manipulatorbaugruppe (30) eine Ablage (32) für ein Transportgut (TG) aufweist.

10. Regalroboter (1) gemäß einer der vorherigen Ansprüche, mit einer Gehäusebaugruppe (50) zur Aufnahme der Lagerbaugruppe (20) und der Manipulatorbaugruppe (30).

11. Regalroboter (1) gemäß einer der vorherigen Ansprüche, mit einer Sensorik zum Erfassen einer Umgebung des Regalroboters (1).

12. Regalroboter (1) gemäß einer der vorherigen Ansprüche, wobei der Regalroboter (1) ausgestaltet ist, autonom zu agieren oder durch eine Zentraleinheit gesteuert zu werden.

13. Verfahren zum Steuern eines Regalroboters (1) gemäß einem der Ansprüche 1 bis 12, mit den Schritten:
- Bewegen (S1) eines Transportgutes (TG) entlang einer ersten horizontalen Linearachse (Aₓ) von einem Regallagerplatz (LP) in einen Vertikaltransportbereich (40) des Regalroboters (1);
- sofern erforderlich, Bewegen (S2) des Transportgutes (TG) innerhalb des Vertikaltransportbereichs (40) entlang einer vertikalen Linearachse (A_{z}); und
- Bewegen (S4) des Transportgutes (TG) entlang einer zweiten horizontalen Linearachse (A_{y}), die senkrecht zur ersten horizontalen Linearachse (Aₓ) ist, vom Vertikaltransportbereich (40) zu einer Lagereinheit (21) einer Lagerbaugruppe (20) des Regalroboters (1).

14. Computerprogramm mit Instruktionen, die bei Ausführung durch einen Computer den Computer zur Ausführung der Schritte eines Verfahrens gemäß Anspruch 13 veranlassen.

15. Steuergerät (100) für einen Regalroboter (1) gemäß einem der Ansprüche 1 bis 12, mit einem Speicher (102), in dem Instruktionen abgelegt sind, und einem Prozessor (101), wobei der Prozessor (101) eingerichtet ist, bei Ausführung der Instruktionen die Schritte eines Verfahren gemäß Anspruch 13 auszuführen.
